# EUROPEAN PATENT SPECIFICATION

(11) **EP 4 375 086 B1**
(45) Date of publication and mention of the grant of the patent: **29.10.2025**
(21) Application number: 24167641.0
(22) Date of filing: 06.08.2020
(51) Int. Cl.: B60C 9/06, B60C 15/06, B60C 15/00, B60C 9/09

(54) **BICYCLES TYRE**
FAHRRADREIFEN
PNEU POUR BICYCLETTES

(30) Priority: 08.08.2019 IT 201900014394
(43) Date of publication of application: 29.05.2024
(62) Divisional of application: 20764160.6
(73) Proprietor: Pirelli Tyre S.p.A., 20126 Milano (IT)
(72) Inventor: GALLI, Filippo, I-20126 Milano (IT); TOMIATI, Nicolò, I-20126 Milano (IT); MATRASCIA, Giuseppe, I-20126 Milano (IT)
(74) Representative: Porta & Consulenti Associati S.p.A.

(56) References cited:
- EP-A1- 1 864 828
- JP-A- H09 175 123
- US-A- 3 911 987

## Description

The present invention relates to a bicycles tyre.

Preferably, bicycles equipped with the tyre of the invention are off-road bicycles, electrically assisted bicycles, also commonly called "electric bicycles" or "e-bikes".

In the present description and in the following claims, the following definitions apply.

The term "electrically assisted bicycles" is meant to refer to bicycles provided with an auxiliary electric motor capable of developing a maximum continuous nominal power of 0.25 KW.

The term "off-road bicycles" is meant to refer to bicycles intended to travel on typically rough or irregular terrain, i.e. terrains that are very different from one another and different from asphalt, like for example muddy, sandy, rocky, compacted, soft terrain, etc.. Such bicycles include those that satisfy the regulations established by the Union Cycliste Internationale (UCI) and comprise in particular "mountain bikes" (MTB), all terrain bikes (ATB), BMXs, down-hill bikes, fat bikes, cyclo-cross bikes and trial bikes.

The term "equatorial plane" of the tyre is meant to indicate a plane perpendicular to the rotation axis of the tyre and that divides the tyre into two symmetrically equal parts.

The terms "radial" and "axial" and the expressions "radially inner/outer" and "axially inner/outer" are used with reference, respectively, to a direction perpendicular and to a direction parallel to the rotation axis of the tyre.

The expressions "axially inner" and "axially outer" indicate a position respectively closer to, and further from, the equatorial plane.

The expressions "radially inner" and "radially outer" indicate a position respectively closer to, and further from, the rotation axis of the tyre.

The terms "circumferential" and "circumferentially" are used with reference to the direction of annular extension of the tyre, i.e. to the rolling direction of the tyre, which corresponds to a direction lying on a plane coinciding with or parallel to the equatorial plane of the tyre.

The term "elastomeric material" is meant to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked through heating.

The term "cord", or the expression "reinforcing cord" is meant to indicate an element consisting of one or more wire-like elements (hereinafter also called "wires") optionally coated by, or incorporated in, a matrix of elastomeric material.

The term "diameter" of a cord or of a wire is meant to indicate the thickness of the cord or of the wire measured as prescribed by the BISFA E10 method (The International Bureau For The Standardization Of Man-Made Fibres, Internationally Agreed Methods For Testing Steel Tyre Cords, 1995 edition).

The term "thread count" of a layer or of a ply or of a fabric is meant to indicate the number of reinforcing cords per unit length present in such a layer/ply/fabric. The thread count is measurable in TPI (threads per inch).

The term "linear density" or "count" of a cord or of a thread is meant to indicate the weight of the reinforcing cord per unit length. The linear density is measurable in dtex (grams per 10 km of length).

The term "bicycle tyre" is meant to indicate a tyre that has a fitting diameter of not less than about 300 mm (which corresponds to an outer diameter of about 15 inches), preferably less than, or equal to, about 650 mm (which can correspond to a particular outer diameter of about 28, 29 or 30 inches depending on the width of the tyre), and width not greater than about 120 mm, preferably greater than about 18 mm.

The term "fitting diameter" of a tyre is meant to indicate the diameter of the tyre measured at the inner diameter of the anchoring bead cores of the tyre to the wheel rim, as prescribed in ETRTO (The European Tyre and Rim Technical Organization) or ISO (International Organization for Standardization).

The term "width" of a tyre is meant to indicate the maximum axial extension (or "maximum cord") of the tyre, measured according to the ETRTO standard. The width of the tyre corresponds to the width of the projection of the tyre on a plane perpendicular to the equatorial plane of the tyre and tangent to the maximum diameter of the tyre, such a width corresponding to the dimension of the segment having the two axially outermost points of the tyre as extremities.

In the rest of the present description and in the following claims, when reference is made to certain values, they are meant as absolute values, i.e. both positive values and negative values.

A bicycles tyre typically comprises a carcass structure turned around a pair of bead cores and a tread band arranged in a position radially outer to the carcass structure.

The carcass structure is intended to withstand the inflation pressure and to bear the weight of the bicycle and of the cyclist. It comprises one or more carcass plies, each comprising a plurality of suitably oriented reinforcing cords. In the case of plural carcass plies, they are inclined with respect to one another to form a crossed structure.

The tread band is intended to ensure the adherence of the tyre to the asphalt.

The bead cores have the task of ensuring that the tyre is anchored to the wheel rim.

In a position radially inner to the carcass structure there is typically an air chamber in which pressurized air is introduced. However, there are types of tyres called "tubeless", i.e. devoid of air chamber. In such tyres the pressurized air acts directly on the carcass structure. The latter and the rim of the wheel are configured so that their mutual anchoring ensures the airtight seal.

### PRIOR ART

CN 202806223U describes a bicycle tyre comprising a crown portion, two sidewalls arranged laterally to the crown portion and a carcass arranged inside the crown portion and the sidewalls. The carcass comprises a first inner carcass ply wound around a first bead core and folded on itself at a first sidewall of the tyre. A second inner carcass ply is wound around a second bead core and folded on itself at a second sidewall of the tyre. The first and the second carcass ply extend for a height comprised between 30% and 60% of the height of the corresponding sidewall of the tyre. The carcass also comprises an outer carcass ply wound on the first and the second carcass ply and folded on itself symmetrically at the crown portion. An anti-abrasion insert is arranged outside of the outer carcass ply, surrounds a respective bead core and extends for less than 30% of the height of the respective sidewall of the tyre.

### SUMMARY OF THE INVENTION

The Applicant has observed that when high loads are transmitted to the tyre, like for example in the case of an electric bicycle in which the drive torque exerted by the cyclist is added to by the drive torque given by an electric motor or like in the case of off-road bicycles used on particularly rough terrain, the tyre is subjected to substantial stresses that generate torsional deformations (which tend to deform the tyre along a plane parallel to the plane passing through the rotation axis of the tyre), longitudinal deformations (which tend to deform a tyre in a direction perpendicular to the rotation axis thereof and along the direction of travel), vertical deformations (which tend to deform the tyre along a direction directed towards the center of the tyre) and lateral deformations (which tend to deform a sidewall of the tyre during cornering).

The Applicant has observed that the performance (response in acceleration and braking, handling, controllability in straights or in corners, adherence and feeling of safety given by stability in corners) of the tyre is closely linked to the deformation of the tyre induced by the loads to which the tyre is subjected.

The Applicant has observed that an increase in the torsional, longitudinal, lateral and vertical rigidity of the tyre has a positive impact on the performance of the tyre.

The Applicant has observed that by arranging a respective elastomeric material filler in a position radially outer to each bead core and axially between the carcass plies, it is possible to increase the overall rigidity of the tyre, in other words the vertical, torsional, lateral and longitudinal rigidity.

The Applicant has indeed observed that the elastomeric material filler stiffens the tyre at the bead and the sidewall thereof.

The Applicant has perceived that the effectiveness of the elastomeric material filler is the maximum when the elastomeric material filler is made integral to the bead core, so that the elastomeric material filler cannot move with respect to the bead core and can effectively stiffen the bead and the sidewall of the tyre.

The Applicant has however noted that by assigning the task of holding in position the elastomeric material filler and the bead core to the carcass plies, there is the possibility of the elastomeric material filler being able to move with respect to the bead core.

The Applicant has indeed noted that the carcass plies have the primary task of supporting the loads that are transmitted between ground and wheel of the bicycle and between wheel of the bicycle and ground and, precisely for this reason, two juxtaposed carcass plies (whether they are physically distinct or given by a carcass ply folded on itself) between which the elastomeric material filler is arranged tend to move and slide with respect to one another, at least partially decreasing the clamping effect on the elastomeric material filler and the holding effect of the elastomeric material filler with respect to the bead core.

The Applicant has found that such a problem can be solved by anchoring the elastomeric material filler to the bead core through the engagement of an element the primary task of which is to hold bead core and elastomeric material filler joined together and that is hardly or not at all involved in the task of bearing the loads that are transmitted between ground and bicycle wheel and between bicycle wheel and ground.

Therefore, the present invention relates to a bicycles tyre, comprising a pair of bead cores, a carcass structure turned around the pair of bead cores and a tread band radially outer to the carcass structure.

Preferably, at each bead core an elastomeric material filler is provided which extends in a radial direction for a first length starting from the bead core.

Preferably, at each bead core a loop is provided interposed between the carcass structure and the elastomeric material filler, turned around the bead core so as to define a first flap axially outer to the elastomeric material filler and a second flap axially inner to the elastomeric material filler.

Preferably, the first flap extends in a radial direction for a second length starting from the bead core and the second flap extends in a radial direction for a third length starting from the bead core.

Preferably, a bead core to bead core ply is provided placed radially outside the carcass structure and radially inside the tread band.

The Applicant deems that the loop is capable of joining and holding together in a substantially integral manner, a bead core and the relative elastomeric material filler, making it possible to obtain an effective stiffening of the bead and sidewall area of the tyre and achieving an improved drivability, an improved reactivity and an improved feeling of safety of the tyre. This, in the opinion of the Applicant, by virtue of the fact that the loop, being interposed between the carcass structure and the elastomeric material filler at least partially prevents possible sliding among the carcass plies from transferring differentiated stresses to the elastomeric material filler and to the bead core causing a relative movement between bead core and elastomeric material filler. The Applicant indeed deems that the loop, being turned around the bead core and extending radially away from the bead core, makes it possible both to couple and hold the bead core with the elastomeric material filler and to act as interface between the carcass structure and the bead core - elastomeric material filler assembly, mitigating or at least partially eliminating possible decoupling effects that the carcass structure tends to transfer to the bead core and to the elastomeric material filler. The bead core to bead core ply has the function of preventing or in any case limiting the possibility of pointed bodies being able to perforate the carcass plies.

The present invention may have at least one of the following preferred features, taken singularly or in combination with any of the other described preferred features.

Preferably, the second and the third length are less than or equal to the first length.

The Applicant has observed that the holding effect of the bead core to the elastomeric material filler is particularly improved when the two flaps of the loop do not close on themselves, in other words when the two flaps of the loop are not in mutual contact. The Applicant deems that by avoiding the mutual contact of the two flaps of the loop, the two flaps of the loop are prevented from or in any case limited to slide with respect to one another and with respect to the elastomeric material filler. By arranging the second and third length, in other words the radial extension of the first flap and of the second flap of the loop, less than or equal to the first length, in other words the radial extension of the elastomeric material filler, the two flaps of the loop cannot enter into mutual contact since they are obstructed by the presence of the elastomeric material filler axially interposed between the two flaps.

Preferably, the second and the third length are at least about 30% of the first length. Therefore, preferably, the two flaps of the loop extend between about 30% and about the totality of the radial extension of the elastomeric material filler.

Preferably, the second and the third length are substantially equal to one another. In this way, the loop extends substantially symmetrically on both of the axially opposite surfaces of the elastomeric material filler.

Preferably, the loop is placed in direct contact with the elastomeric material filler.

The Applicant has noted that in this way the loop maximizes the gripping and holding action on the elastomeric material filler. The Applicant deems that the direct contact between loop and elastomeric material filler cancels out or in any case significantly reduces possible relative sliding between loop and elastomeric material filler, maximizing the stable union effect between elastomeric material filler and bead core.

Preferably, the first length is less than the distance measured in the radial direction between the bead core and the radially outermost portion of the carcass structure. The elastomeric material filler thus preferably extends at only the sidewall or a portion of the sidewall of the tyre.

Preferably, the first length is at least 20% of the distance measured in the radial direction between the bead core and the radially outermost portion of the carcass structure.

Preferably, the first length is between about 20% and about 80% of the distance measured in the radial direction between the bead core and the radially outermost portion of the carcass structure. The elastomeric material filler thus preferably engages a portion of the sidewall of the tyre.

Preferably, the first length is greater than about 10 millimeters. Preferably, the first length is less than about 50 millimeters. Preferably, the first length is comprised between about 10 millimeters and about 50 millimeters extremes included, more preferably comprised between about 20 millimeters and about 40 millimeters extremes included, even more preferably comprised between about 30 millimeters and about 35 millimeters extremes included.

Preferably, the elastomeric material filler has a thickness, measured in an axial direction, less than or equal to the thickness, measured in the same direction, of the bead core. Preferably, the elastomeric material filler has a thickness, measured in an axial direction, greater than or equal to about 0.5 millimeters.

Preferably, the elastomeric material filler has a thickness, measured in an axial direction, less than or equal to about 4 millimeters extremes included.

More preferably, the elastomeric material filler has a thickness, measured in an axial direction, comprised between about 1 millimeter and 3 millimeters extremes included, even more preferably comprised between about 1.3 and 2.5 millimeters extremes included.

Preferably, the elastomeric material filler is tapered along the extension thereof in the radial direction, so that the portion of elastomeric material filler radially adjacent to the bead core has a thickness measured in an axial direction greater than the thickness measured in an axial direction of a portion of elastomeric material filler radially distal from the bead core.

Preferably, the thickness measured in an axial direction of the elastomeric material filler at the portion radially adjacent to the bead core is equal to or less than the thickness measured in an axial direction of the bead core.

Preferably, the elastomeric material filler is a monolithic insert.

Preferably, said carcass structure comprises at least one carcass ply including a plurality of reinforcing cords inclined, with respect to an equatorial plane, by a first angle.

Preferably, the carcass ply is turned around the bead cores so as to produce at least two superimposed layers of carcass ply; the elastomeric material insert and the loop being interposed between the two superimposed layers of carcass ply.

Preferably, the carcass ply is turned around the bead cores so as to produce two layers of carcass ply at two opposite first portions of the tyre and three superimposed layers of carcass ply at a second portion of the tyre arranged between the first two portions; the elastomeric material insert being arranged in said first two portions of the tyre.

Preferably, the opposite two first portions of the tyre at which two layers of the carcass ply are juxtaposed coincide with at least part of the two sidewalls.

In some embodiments of the invention further carcass plies can be provided.

Preferably, said first angle of inclination of the reinforcing cords of the carcass ply is between about 30° and about 60°, extremes included.

Preferably, said first angle is greater than, or equal to, about 30°, more preferably greater than, or equal to, about 40°.

Preferably, said first angle is less than, or equal to, about 60°, more preferably less than, or equal to, about 50°.

In preferred embodiments, said first angle is between about 40° and about 50°, extremes included, for example equal to about 45°.

Preferably, the reinforcing cords of said at least one carcass ply are made of a textile material, so as to limit as much as possible the weight of the tyre.

Preferably, the carcass ply or each of the carcass plies has a thread count greater than, or equal to, about 15 TPI, more preferably greater than, or equal to, about 30 TPI, even more preferably greater than, or equal to, about 60 TPI, even more preferably, greater than, or equal to, about 120 TPI.

Preferably, the carcass ply or each of the carcass plies has a thread count less than, or equal to, about 360 TPI, more preferably less than, or equal to, about 300 TPI, even more preferably less than, or equal to, about 240 TPI, even more preferably less than, or equal to, about 200 TPI.

In preferred embodiments, the carcass ply or each of the carcass plies, has a thread count comprised between about 15 TPI and about 360 TPI, extremes included, preferably between about 30 TPI and about 300 TPI, extremes included, more preferably between about 60 TPI and about 240 TPI, extremes included, even more preferably between about 120 TPI and about 200 TPI, extremes included, for example equal to about 60 TPI.

Preferably, the reinforcing cords of the carcass ply or of each carcass ply have a diameter less than, or equal to, about 0.55 millimeters, more preferably less than, or equal to, about 0.35 millimeters.

Preferably, the reinforcing cords of the carcass ply or of each carcass ply have a diameter greater than, or equal to, about 0.10 millimeters, more preferably greater than, or equal to, about 0.12 millimeters.

In preferred embodiments, the reinforcing cords of the carcass ply or of each carcass ply have a diameter comprised between about 0.10 millimeters and about 0.55 millimeters, extremes included, preferably between about 0.12 millimeters and about 0.35 millimeters, extremes included, for example equal to about 0.30 millimeters.

Preferably, the reinforcing cords of the carcass ply or of each carcass ply have a linear density greater than, or equal to, about 110 dtex, more preferably greater than, or equal to, about 230 dtex.

Preferably, the reinforcing cords of the carcass ply or of each carcass ply have a linear density less than, or equal to, about 1300 dtex, more preferably less than, or equal to, about 940 dtex.

In preferred embodiments, the reinforcing cords of the carcass ply or of each carcass ply have a linear density comprised between about 110 dtex and about 1300 dtex, extremes included, preferably between about 230 dtex and about 940 dtex, extremes included, for example equal to about 450 dtex.

Preferably, the loop is made of the same material from which the carcass structure is made.

Preferably, the loop is made from a ply including a plurality of reinforcing cords made of textile material that can all be parallel to one another or that can make a square fabric structure (i.e. having warp reinforcing cords and weft reinforcing cords).

Preferably, the reinforcing cords are inclined with respect to an equatorial plane. In the case of reinforcing cords all substantially parallel to one another, the reinforcing cords are preferably inclined by a second angle.

Preferably, the second angle is equal to the first angle. Preferably, the reinforcing cords of the ply of the loop have a diameter equal to the diameter of the reinforcing cords of the carcass ply.

Preferably, the thread count of the reinforcing cords of the ply of the loop is equal to or greater than the thread count of the reinforcing cords of the carcass ply.

Preferably, the reinforcing cords of the ply of the loop have double thread count with respect to the thread count of the reinforcing cords of the carcass ply.

Preferably, at each bead core, an anti-abrasive ribbon-shaped element is provided, arranged outside the carcass structure.

Preferably, the ribbon-shaped element is turned around the bead core.

Preferably, the anti-abrasive ribbon-shaped element is a ply comprising reinforcing cords or a strip of elastomeric polymer.

In the case in which the anti-abrasive ribbon-shaped element is a ply comprising a plurality of reinforcing cords, the reinforcing cords are preferably made of textile material.

Preferably, the reinforcing cords of the anti-abrasive ribbon-shaped element can all be parallel to one another or can make a square fabric structure (i.e. having warp reinforcing cords and weft reinforcing cords).

Preferably, the reinforcing cords are arranged inclined with respect to an equatorial plane.

Preferably, the anti-abrasive ribbon-shaped element extends radially for a distance less than the second and third distance. In other words, the anti-abrasive ribbon-shaped element extends radially for a length less than the length of the first and second flap of the loop.

Preferably, the bead core to bead core ply extends from one bead core to the other bead core.

Preferably, the bead core to bead core ply is not turned around the bead cores.

Preferably, the bead core to bead core ply is a ply comprising a plurality of reinforcing cords. Preferably, the reinforcing cords of the bead core to bead core ply can all be parallel to one another or can make a square fabric structure (i.e. having warp reinforcing cords and weft reinforcing cords).

Preferably, the reinforcing cords are arranged inclined with respect to an equatorial plane. In the case of reinforcing cords all substantially parallel to one another, the reinforcing cords are preferably inclined, with respect to an equatorial plane, by a third angle.

Preferably, said third angle of inclination of the reinforcing cords of the bead core to bead core ply is between about 30° and about 60°, extremes included.

Preferably, said third angle is greater than, or equal to, about 30°, more preferably greater than, or equal to, about 40°.

Preferably, said third angle is less than, or equal to, about 60°, more preferably less than, or equal to, about 50°.

In preferred embodiments, said third angle is between about 40° and about 50°, extremes included, for example equal to about 45°.

Preferably, the reinforcing cords of the bead core to bead core ply are made of textile material. More preferably, the reinforcing cords of the carcass structure and of the bead core to bead core ply are made of the same textile material.

In preferred embodiments, the bead core to bead core ply has a thread count comprised between about 15 TPI and about 360 TPI, extremes included, preferably between about 30 TPI and about 300 TPI, extremes included, more preferably between about 60 TPI and about 240 TPI, extremes included, even more preferably between about 120 TPI and about 200 TPI, extremes included, for example equal to about 60 TPI.

In preferred embodiments, the reinforcing cords of the bead core to bead core ply have a diameter comprised between about 0.10 millimeters and about 0.55 millimeters, extremes included, preferably between about 0.12 millimeters and about 0.35 millimeters, extremes included, for example equal to about 0.30 millimeters.

In preferred embodiments, the reinforcing cords of the bead core to bead core ply have a linear density comprised between about 110 dtex and about 1300 dtex, extremes included, preferably between about 230 dtex and about 940 dtex, extremes included, for example equal to about 450 dtex.

### DESCRIPTION OF THE FIGURES AND OF PREFERRED EMBODIMENTS

Further features and advantages of the tyre of the present invention will become clearer from the following detailed description of some preferred embodiments thereof, made with reference to the attached drawings. In such drawings:
- figure 1 schematically shows a perspective section of an embodiment of the bicycles tyre in accordance with the present invention;
- figure 1A shows an enlargement of a detail of figure 1; and
- figures 2-8 show possible constructive schemes representative of alternative embodiments of the tyre of figure 1.

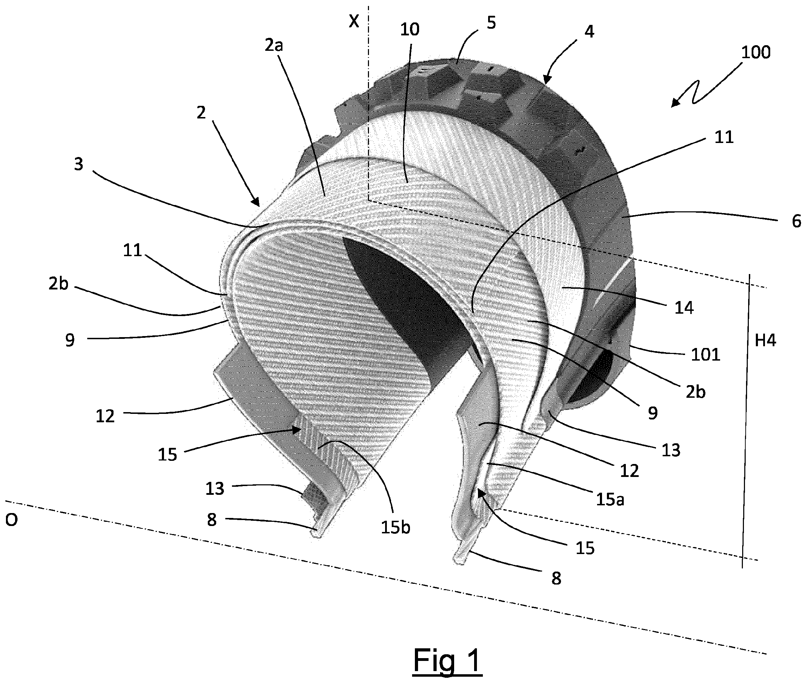

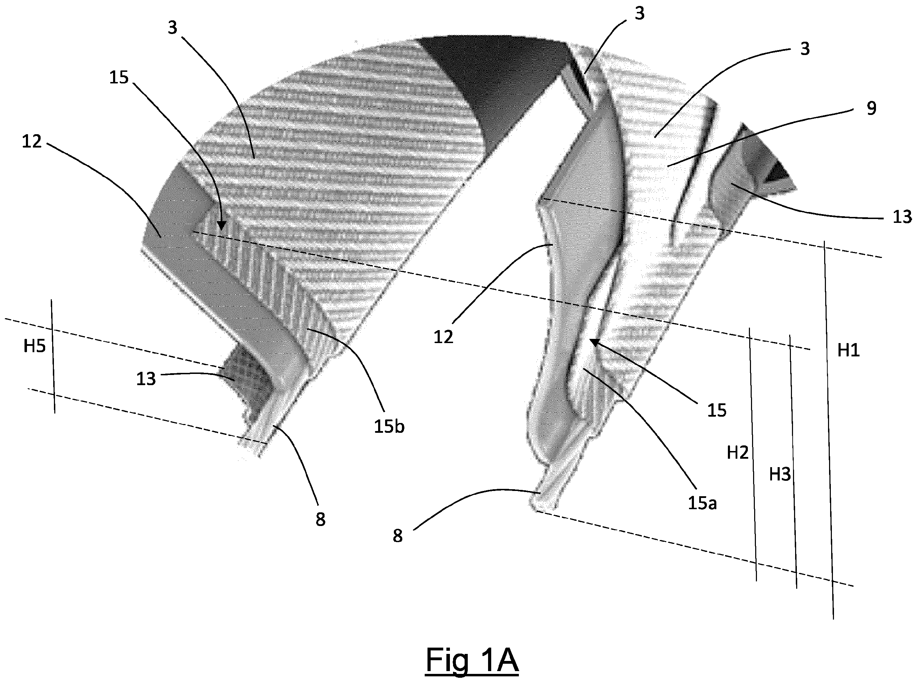

In figure 1, reference numeral 100 wholly indicates a bicycles tyre according to the present invention. The tyre is intended to be mounted on the wheels of a bicycle, in particular on the wheels of an electric bicycle or on the wheels of an off-road bicycle.

The tyre 100 comprises a rotation axis O and an equatorial plane X perpendicular to the rotation axis O. Also defined are a circumferential direction arranged according to the direction of rotation of the tyre 100 and an axial direction perpendicular to the equatorial plane X and/or parallel to the rotation axis O.

The tyre 100 of figure 1 comprises a carcass structure 2 comprising a crown portion 2a preferably symmetrically arranged with respect to the equatorial plane X and opposite lateral portions 2b arranged on axially opposite sides with respect to the crown portion 2a.

In radially outer position to the carcass structure 2 a tread band 4 is provided, by means of which the contact of the tyre 100 with the road surface takes place.

The tread band 4 comprises a central portion 5 and two lateral portions 6 (or sidewalls 6) arranged on axially opposite sides with respect to the central portion 5.

The central portion 5 can comprise (like in the example illustrated in figure 1) a plurality of blocks 7.

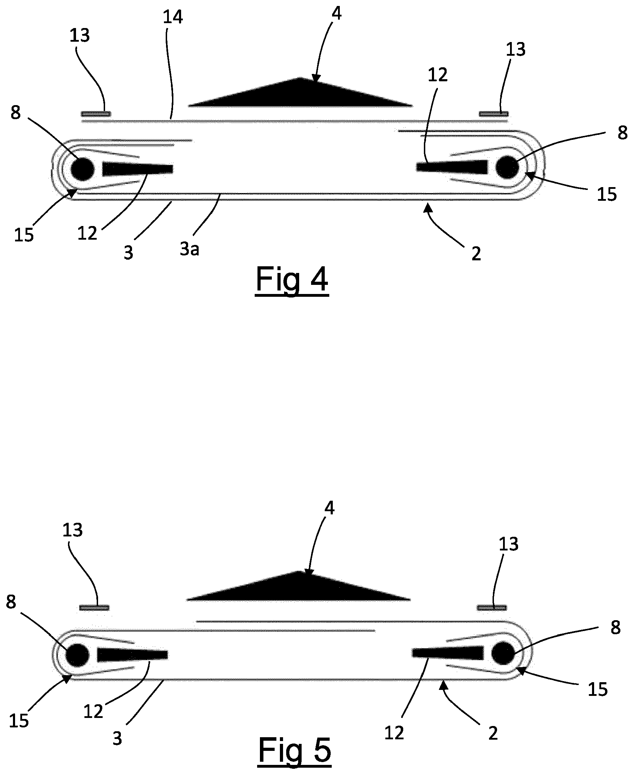

In the embodiment illustrated in figure 1, the carcass structure 2 comprises a single carcass ply 3, but there are other embodiments (like for example those schematized in figures 4, 7 and 8) in which the carcass structure 2 comprises two carcass plies indicated with 3, 3a in figures 4, 7 and 8.

What is described below with reference to the carcass ply illustrated in the drawings applies both to the single carcass ply 3 of the tyre and to each carcass ply 3, 3a of a tyre having plural plies, unless explicitly stated otherwise.

The carcass ply 3 is turned around respective annular anchoring structures 8, called "bead cores".

The carcass ply 3 is turned around the bead cores 8 so as to produce many layers of carcass ply 3 radially juxtaposed over one another.

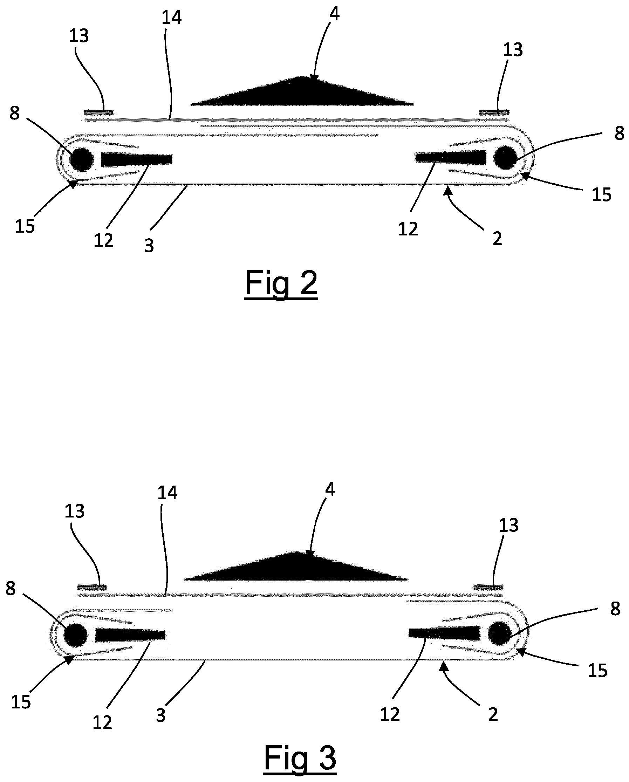

In the embodiment illustrated in figure 1 and schematized in figures 2 and 5, the carcass ply 3 is turned around the bead cores 8 so that two layers of carcass ply 3 are arranged at two opposite first portions 9 of the tyre that are preferably at least partially juxtaposed at the sidewalls 6 of the tread band. The carcass ply 3 also has three juxtaposed layers of ply at a second portion 10 axially arranged between the first two portions 9 and preferably at least partially coinciding with the crown 2a.

The carcass ply 3 has two end edges 11 that define two separation areas between the portion with three juxtaposed layers of ply and the two portions of two juxtaposed layers of ply of the carcass ply 3.

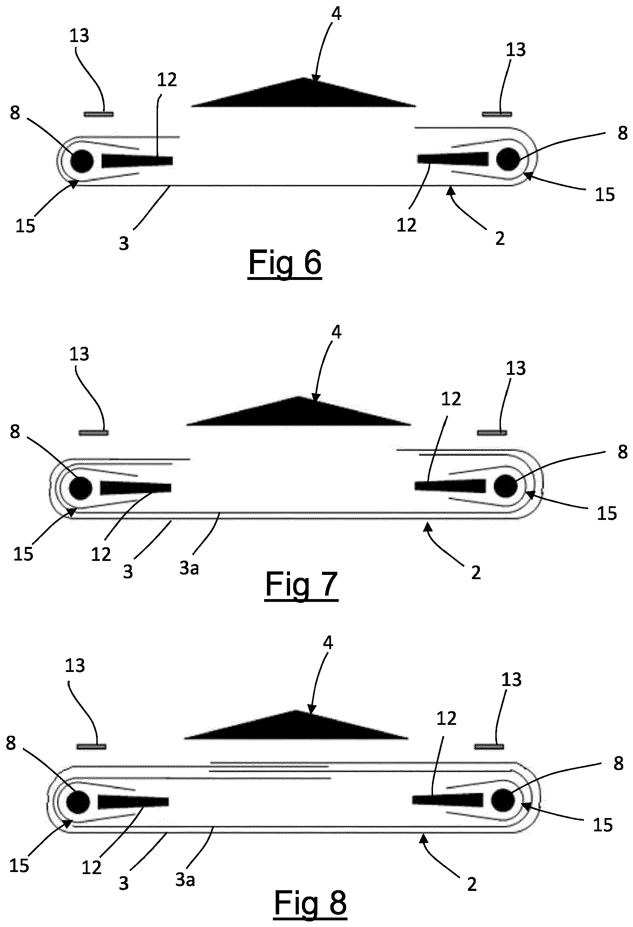

In an alternative embodiment illustrated in figures 3 and 6 the carcass ply 3 is turned around the bead cores 8 so that two layers of carcass ply 3 are arranged at two opposite first portions 9 of the tyre that are preferably at least partially juxtaposed at the sidewalls 6 of the tread band. The carcass ply 3 has a single layer of play at a second portion 10 axially arranged between the first two portions 9 and preferably at least partially coinciding with the crown 2a.

The carcass ply 3 has two end edges 11 that define two separation areas between the portion with a single layer of ply and the two portions of two juxtaposed layers of ply of the carcass ply 3.

In a further alternative embodiment illustrated in figures 4 and 7 there are two carcass plies 3, 3a wherein each carcass ply 3, 3a is turned around the bead cores 8 so that two layers of ply of each carcass ply 3, 3a are arranged at two opposite first portions 9 of the tyre that are preferably at least partially juxtaposed at the sidewalls 6 of the tread band. The two carcass plies 3, 3a have a single layer of ply each at a second portion 10 axially arranged between the first two portions 9 and preferably at least partially coinciding with the crown 2a.

The two carcass plies 3, 3a have two end edges 11 that define two respective separation areas between the portion with a single layer of ply and the two portions of two juxtaposed layers of ply of each carcass ply 3, 3a.

According to this embodiment, the carcass structure 3 has four layers of carcass ply (two for each carcass ply 3, 3a) juxtaposed at the two opposite first portions 9 of the tyre and two layers of carcass ply (one for each carcass ply 3, 3a) juxtaposed at the second portion 10 of the tyre.

In an alternative embodiment illustrated in figure 8, there are two carcass plies 3, 3a wherein each carcass ply 3, 3a is turned around the bead cores 8 so that two layers of ply of each carcass ply 3, 3a are arranged at two opposite first portions 9 of the tyre that are preferably at least partially overlapped at the sidewalls 6 of the tread band.

The two carcass plies 3, 3a have a triple layer of ply each at a second portion 10 axially arranged between the first two portions 9 and preferably at least partially coinciding with the crown 2a.

The two carcass plies 3, 3a have two end edges 11 that define two respective separation areas between the portion with juxtaposed triple layers of ply and the two portions of two juxtaposed layers of ply of each carcass ply 3, 3a.

According to this embodiment, the carcass structure 3 has four layers of carcass ply (two for each carcass ply 3, 3a) juxtaposed at the two opposite first portions 9 of the tyre and six layers of carcass ply (three for each carcass ply 3, 3a) juxtaposed at the second portion 10 of the tyre.

The bead cores 8 are preferably made of textile fibers with high elastic modulus, like for example aramid fibers (common name of aromatic polyamide fibers), or metal wires, like for example steel.

In radially outer and adjacent position to each bead core 8 there is an elastomeric material filler 12 preferably monolithic.

The elastomeric material filler 12 extends from a radially outer surface of the bead core 8. As illustrated in figure 1, the elastomeric material filler 12 is not present radially inside the bead core 8, in other words it only extends in a radially outer direction from the radially outer surface 8a of the bead core 8.

The elastomeric material filler 12 is axially interposed between the layers of carcass ply 3, as illustrated in the attached figures. The elastomeric material filler 12 is axially arranged between the carcass plies 3 preferably in radially inner position with respect to the two end edges 11 of the carcass ply 3, so that each elastomeric material filler is respectively arranged at the two portions of two juxtaposed layers of ply of the carcass ply 3.

The area of the tyre 100 comprising the bead core 8 and the elastomeric material filler 12 forms the so-called "bead", intended for anchoring, through elastically forced fitting, the tyre 100 on a corresponding mounting rim 101 (partially illustrated in figure 1).

As illustrated in the attached figures, at each bead core 8 and in particular in axially outer position to the carcass structure 2, it is possible to apply an anti-abrasive ribbon-shaped element 13. Such an anti-abrasive ribbon-shaped element 13 is interposed between the carcass ply 3 and the rim 101 of the wheel when the tyre 100 is mounted on such a rim 101. The anti-abrasive ribbon-shaped element 13 has the function of ensuring grip and friction with the rim 101 of the wheel, avoiding possible damage due to the abrasion following rubbing of the carcass ply 3 with the rim 101.

Instead of the anti-abrasive ribbon-shaped element 13 it is possible to use a single reinforcing cord deposited possibly after adhesion treatment.

With reference to figures 1, 2, 3 and 4, a bead core to bead core ply 14 is illustrated that can optionally be present in the tyre 100.

The bead core to bead core ply 14 is associated with the carcass structure 2 in radially outer position and preferably extends from one bead core 8 to the other bead core 8 without being turned around the bead cores. Alternatively, the bead core to bead core ply 14 extends only at the crown 2a of the carcass structure 2.

The bead core to bead core ply 14 is arranged radially inside the tread band 4. The function of the bead core to bead core ply 14 is to prevent possible punctures of the tyre 100.

Figures 5, 6, 7 and 8 show tyres structures without the bead core to bead core ply 14.

At each bead core 8 and in a position axially interposed between the elastomeric material filler 12 and the carcass ply 3 there is a loop 15 turned around the bead core 8. The loop 15 defines a first flap 15a and a second flap 15b, respectively axially outer and axially inner with respect to the elastomeric material filler 12, which extend radially away from the bead core 8.

The function of the loop 15 is to hold together in a substantially integral manner the elastomeric material filler 12 and the bead core 8. As shown in figure 1 and schematically represented in figures 2 to 7, the flaps 15a, 15b of the loop are in direct contact with the elastomeric material filler 12.

Both the loop 15 and the elastomeric material filler 12 extend circumferentially along the entire extension of the tyre 100.

As shown in the enlargement of figure 1A, the elastomeric material filler 12 extends in a radial direction for a length H1 starting from the bead core 8. The first length H1 is less than the distance H4 (illustrated in figure 1) measured in the radial direction that separates the bead core 8 from the radially outermost portion of the crown 2a of the carcass structure 2, in other words the elastomeric material filler 12 engages less than half of the carcass structure 2. In the preferred embodiment of the invention, the first length H1 is between about 20% and about 80%, including extreme values, of the distance H4, preferably is between about 30% and about 70%, including extreme values, of the distance H4, even more preferably it is about 50% of the distance H4.

In absolute terms, the first length H1 is comprised between about 10 millimeters and about 50 millimeters extremes included, more preferably comprised between about 20 millimeters and about 40 millimeters extremes included, even more preferably comprised between about 30 millimeters and about 35 millimeters extremes included.

The elastomeric material able to be used as elastomeric material filler 12 according to the present invention can have the following mechanical properties (static and dynamic):
Ultimate tensile strength equal to or greater than 10 MPa, preferably comprised between about 15 MPa and about 40 MPa extremes included.

Elongation at break equal to or greater than about 120% preferably equal to or greater than about 150%, even more preferably comprised between about 200% and about 800% extremes included, even more preferably comprised between about 300% and about 800% extremes included.

Dynamic elastic modulus E' (23°C - 10Hz) equal to or greater than about 2 MPa, preferably comprised between about 3 MPa and about 35 MPa extremes included.

Dynamic elastic modulus E' (70°C - 10Hz) equal to or greater than about 2 MPa preferably comprised between about 2.2 Mpa and about 25 Mpa extremes included.

Hereinafter an example is indicated of elastomeric material for elastomeric material filler 12 and of preparation of the elastomeric material filler 12 (the amounts of the various components are indicated in phr - Parts per Hundred Rubber).

All of the components, with the exception of sulfur, accelerant (TBBS) and retardant (PVI), were mixed in an internal mixer (Pomini model PL 1,6) for about 5 minutes (1st step). As soon as the temperature has reached 145 ± 5°C, the elastomeric composition was discharged. The sulfur, the accelerant (TBBS) and the retardant (PVI) were added and the mixing was carried out in an open roller mixer (2nd step).

| **Elastomeric material 12** | |
|---|---|
| **1st step** | |
| **IR** | **100.00** |
| **CB** | **5.00** |
| **Stearic acid** | **2.00** |
| **Zinc oxide** | **8.00** |
| **Tackifying resin** | **2.00** |
| **Oil** | **3.00** |
| **Silica** | **40.00** |
| **Supported silane** | **6.00** |

| **2nd step** | |
|---|---|
| **TBBS** | **1,50** |
| **PVI** | **0,30** |
| **Vulcanizer** | **5,30** |

IR: high cis-1,4-polyisoprene synthetic rubber, SKI-3, Lee Rubber. CB: Carbon black, N375, Cabot.
Stearic acid: Sogis.
Zinc oxide: Zincol Ossidi.
Tackifying resin: Octylphenol resin, SP1068, Si Group.
Oil: MES (Mild Extraction Solvate), ENI SPA.
Silica: Zeosil^{®} 1165 - Solvay.
Supported silane: 50% bis[3-(triethoxysilyl)propyl]tetrasulfide on 50% carbon black, Evonik-Degussa.
TBBS: N-tert-butyl-2-benzothiazylsulfenamide, Vulkacit^{®} NZ/EGC, Lanxess;
PVI: cyclohexyl-thiophthalimide, Santogard PVI, Flexsys Vulcanizer: Sulfur, Redball Superfine, International Sulphur Inc.

The elastomeric material can be characterized by the following parameters

The static mechanical properties (CA05 load at 50% elongation and CA1 load at 100% elongation) according to the standard UNI 6065 were measured at different elongations (50%, 100%) on samples of the aforementioned elastomeric materials, vulcanized at 170°C for 10 minutes. The results obtained are given in Table 2.

The rheometric analysis MDR was carried out using an MDR Monsanto rheometer. The test was carried out at 170°C for 10 minutes with an oscillation frequency of 1.66 Hz (100 oscillations per minute) and an oscillation amplitude of ± 0.5°. The minimum torque (ML) and maximum torque (MH) values were measured.

The dynamic mechanical properties E' and Tan delta were measured using an Instron model 1341 dynamic device in traction-compression mode according to the following methods. A test piece of cross-linked material (170°C for 10 minutes) having a cylindrical shape (length = 25 mm; diameter = 14 mm), preloaded under compression up to a longitudinal deformation of 25% with respect to the initial length and kept at the predetermined temperature (23°C, 70°) for the entire duration of the test was subjected to a dynamic sinusoidal stress having an amplitude of ± 3,5% with respect to the length under pre-load, with a frequency of 10 Hz. The dynamic mechanical properties are expressed in terms of values of dynamic elastic modulus (E') and Tan delta (loss factor). The Tan delta value was calculated as the ratio between the viscous dynamic modulus (E") and the elastic dynamic modulus (E'). Thermoplastic behavior was evaluated as the difference deltaE' between the elastic dynamic modulus values measured at two reference temperatures.

**TABLE 2**

| **Elastomeric material 12** | |
|---|---|
| **STATIC MECHANICAL PROPERTIES** | |
| **Load at 50% elongation (MPa)** | **0.8** |
| **Load at 100% elongation (MPa)** | **1.1** |
| **Ultimate tensile strength (MPa)** | **27** |
| **Elongation at break (%)** | **700** |
| **Energy (J/cm³)** | **52** |

| **DYNAMIC MECHANICAL PROPERTIES** | |
|---|---|
| **E' (23°C - 10Hz) (MPa)** | **3.3** |
| **E' (70°C - 10Hz) (MPa)** | **2.7** |
| **Tan delta (23°C)** | **0.057** |
| **Tan delta (70°C)** | **0.027** |

The thickness of the elastomeric material filler 12 measured in an axial direction, is less than or equal to the thickness, measured in the same direction, of the bead core. Preferably, the elastomeric material filler 12 has a thickness, measured in an axial direction, greater than about 0.5 millimeters. Preferably, the elastomeric material filler 12 has a thickness, measured in an axial direction, less than about 4 millimeters. Preferably, the elastomeric material filler 12 has a thickness, measured in an axial direction, comprised between about 0.5 millimeters and about 4 millimeters extremes included, more preferably comprised between about 1 millimeter and 3 millimeters extremes included, even more preferably comprised between about 1,5 and 2 millimeters extremes included.

In the preferred embodiment of the invention, the elastomeric material filler 12 has a constant thickness along the entire extension thereof, whereas in other embodiments of the invention the elastomeric material filler 12 is tapered along the extension thereof in the radial direction, so that the portion of elastomeric material filler 12 radially adjacent to the bead core 8 has a thickness measured in an axial direction greater than the thickness measured in an axial direction of a portion of elastomeric material filler 12 radially distal from the bead core 8.

In any case, the thickness measured in an axial direction of the elastomeric material filler 12 at the portion radially adjacent to the bead core 8 is equal to or less than the thickness measured in an axial direction of the bead core 8.

As shown in figure 1A, the first flap 15a extends radially away from the bead core 8 for a second length H2. The second flap 15b extends radially away from the bead core 8 for a third length H3, as shown in the enlargement of figure 1A.

The second and third length H2, H3 are preferably equal to one another.

The second and third length H2, H3 are less than or equal to the first length H1. The second and third length H2, H3 are comprised between about 20% and about 80%, including extreme values, of the first length H1, preferably comprised between about 40% and about 60%, including extreme values, of the length H1, even more preferably they are about 50% of the first length H1.

The carcass ply 3 of the tyre 100 is preferably made of elastomeric material and comprises a plurality of reinforcing cords arranged substantially parallel to one another.

The reinforcing cords are preferably made of a textile material selected from Nylon, Rayon, PET, PEN, Lyocell, Aramid, or combinations thereof, in one or more pieces, preferably 1 or 2 pieces.

The reinforcing cords have a diameter preferably comprised between about 0.10 mm and about 0.55 mm, more preferably between about 0.12 mm and about 0.35 mm, extremes included, for example equal to about 0.13 mm.

The reinforcing cords have a linear density comprised between about 110 dtex and about 1300 dtex, more preferably between about 230 dtex and about 940 dtex, extremes included, for example equal to about 450 dtex.

Specific examples of textile materials able to be used for the aforementioned reinforcing cords are the following:
Nylon 930 dtex/1
Nylon 470 dtex/1
Nylon 230 dtex/1
Aramid 470/1
where the number 1 after dtex indicates the number of pieces.

The reinforcing cords are inclined, with respect to the equatorial plane of the tyre 100, by an angle comprised between about 30° and about 60°, preferably between about 40° and about 50°, extremes included.

Preferably, the carcass ply 3 has a thread count comprised between about 15 TPI and about 360 TPI, more preferably between about 30 TPI and about 300 TPI, even more preferably between about 60 TPI and about 240 TPI, even more preferably between about 120 TPI and about 200 TPI, extremes included, for example equal to about 60 TPI.

The tyre 100 illustrated in figure 1 does not comprise belt layers arranged in radially outer position with respect to the carcass structure. However, it is possible to provide different embodiments comprising a belt layer or comprising more than one belt layer.

The loop 15 can be made of the same material from which the carcass ply 3 is made.

The loop 15 is in any case made from a ply 16 including a plurality of reinforcing cords preferably parallel to one another and inclined, with respect to an equatorial plane, by a second angle. Alternatively, the reinforcing cords of the ply 16 can make a square fabric structure (i.e. having warp reinforcing cords and weft reinforcing cords).

The reinforcing cords of the loop 15 are preferably made of a textile material selected from Nylon, Rayon, PET, PEN, Lyocell, Aramid, or combinations thereof, in one or more pieces, preferably 1 or 2 pieces.

The reinforcing cords of the loop 15 have a diameter preferably comprised between about 0.10 mm and about 0.55 mm, more preferably between about 0.12 mm and about 0.35 mm, extremes included, for example equal to about 0.13 mm.

The reinforcing cords of the loop 15 have a linear density comprised between about 110 dtex and about 1300 dtex, more preferably between about 230 dtex and about 940 dtex, extremes included, for example equal to about 450 dtex.

Specific examples of textile materials able to be used for the aforementioned reinforcing cords of the loop 15 are the following:
Nylon 930 dtex/1
Nylon 470 dtex/1
Nylon 230 dtex/1
Aramid 470/1
where the number 1 after dtex indicates the number of pieces.

The reinforcing cords of the loop 15 are inclined, with respect to the equatorial plane of the tyre 100, by an angle comprised between about 30° and about 60°, preferably between about 40° and about 50°, extremes included.

Preferably, the ply 16 of the loop 15 has a thread count equal to or greater than the thread count of the carcass plies 3 of the carcass structure 2. Preferably, the ply 16 of the loop 15 has a thread count comprised between about 15 TPI and about 360 TPI, more preferably between about 30 TPI and about 300 TPI, even more preferably between about 60 TPI and about 240 TPI, even more preferably between about 80 TPI and about 200 TPI, extremes included, for example equal to about 120 TPI.

As an example, the carcass ply 3 can have a thread count of about 60 TPI and the ply 16 of the loop 15 can have a thread count of about 120 TPI.

As shown in figure 1, the inclination of the reinforcing cords of the loop 15 is opposite with respect to the inclination of the reinforcing cords of the carcass ply 3 of the carcass structure. As an example, when the reinforcing cords of the carcass ply 3 is 45°, the reinforcing cords of the ply 16 of the loop 15 are substantially perpendicular to the reinforcing cords of the carcass ply 3.

The anti-abrasive ribbon-shaped element 13 extends radially for a distance H5 (figure 1A) less than the second H2 and third distance H3. In other words, the anti-abrasive ribbon-shaped element 13 extends radially for a length shorter than the length of the first 15a and second flap 15b of the loop 15.

The bead core to bead core ply 14 is a ply comprising reinforcing cords inclined, with respect to an equatorial plane, by a third angle. Such a third angle of inclination of the reinforcing cords of the bead core to bead core ply 14 is between about 30° and about 60°, extremes included, preferably comprised between about 40° and about 50°, extremes included, for example equal to about 45°.

Alternatively, the reinforcing cords of the bead core to bead core ply 14 can make a square fabric structure (i.e. having warp reinforcing cords and weft reinforcing cords).

The reinforcing cords of the bead core to bead core ply 14 are made of textile material. The reinforcing cords of the carcass structure and of the bead core to bead core ply are made of the same textile material.

In preferred embodiments, the bead core to bead core ply 14 has a thread count comprised between about 15 TPI and about 360 TPI, extremes included, preferably between about 30 TPI and about 300 TPI, extremes included, more preferably between about 60 TPI and about 240 TPI, extremes included, even more preferably between about 120 TPI and about 200 TPI, extremes included, for example equal to about 60 TPI.

In preferred embodiments, the reinforcing cords of the bead core to bead core ply 14 have a diameter comprised between about 0.10 millimeters and about 0.55 millimeters, extremes included, preferably between about 0.12 millimeters and about 0.35 millimeters, extremes included, for example equal to about 0.30 millimeters.

In preferred embodiments, the reinforcing cords of the bead core to bead core ply 14 have a linear density comprised between about 110 dtex and about 1300 dtex, extremes included, preferably between about 230 dtex and about 940 dtex, extremes included, for example equal to about 450 dtex.

As shown in figure 1, in the case of reinforcing cords of the carcass ply 3 and of the bead core to bead core ply 14 being substantially parallel, the inclination of the reinforcing cords of the bead core to bead core ply 14 is opposite with respect to the inclination of the reinforcing cords of the carcass ply 3 of the carcass structure 2. As an example, when the reinforcing cords of the carcass ply 3 is 45°, the reinforcing cords of the bead core to bead core ply 14 are substantially perpendicular to the reinforcing cords of the carcass ply 3.

Preferably, the building of the tyre 100 takes place according to processes known by those skilled in the art.

Some tests were carried out to evaluate the performance of bicycle tyres in accordance with the present invention.

In particular, three tyres were tested - respectively, a reference tyre (tyre 1), a tyre with filler (tyre 2) and a tyre according to the present invention (tyre 3).

The three tyres have dimensions of 27.5x2.6 (ETRTO 65-584).

The three tyres were mounted on respective rims having size 584 x 21C. The rigidity of the rims is such that by applying any load to the wheel, the contribution of the rim to the total deformation of the wheel is less than 1%.

The three tyres differ only in the following features:
- the tyre with filler has, in addition to the reference tyre, an elastomeric material filler, of the type described having thickness in the axial direction equal to the thickness of the bead core and having extension in the radial direction of about 35 millimeters, at each bead core;
- the tyre in accordance with the present invention has, in addition to the filler, a loop, of the type described having reinforcing cords with a thread count double the thread count of the reinforcing cords of the carcass plies and extending up to about half the radial extension of the elastomeric material filler, at each bead core.

All three of the tyres are provided with identical bead core to bead core ply of the type described, identical carcass structure (of the type represented in figure 1 and 2), identical tread band and identical anti-abrasive ribbon-shaped element.

In order to carry out rigidity tests of the tyre each wheel (rim and tyre) was mounted on a fixed hub. The tyres were inflated to 2 bar. Each tyre had possible blocks removed from the tread band and the tyre was placed in contact with a flat surface. The wheel was subjected to a fixed vertical load and a longitudinal load, a lateral load and a torsional torque were then applied alternately at the contact area of the tyre with a flat surface. A load cell placed on the hub measured forces and moments transmitted to the wheel. The vertical rigidity was calculated as a ratio between the vertical force applied and the vertical displacement of the wheel. The lateral rigidity was calculated as a ratio between the lateral force applied and the lateral displacement of the wheel. The longitudinal rigidity was calculated as a ratio between the longitudinal force applied and the lateral displacement of the wheel. The torsional rigidity was calculated as a ratio between the torsional torque applied and the rotation of the wheel.

From comparative rigidity tests of the tyre it emerged that:
- the vertical rigidity of the tyre 2 increased by about 6% with respect to the tyre 1 and the vertical rigidity of the tyre 3 increased by about 10% with respect to the tyre 1;
- the lateral rigidity of the tyre 2 increased by about 5% with respect to the tyre 1 and lateral rigidity of the tyre 3 increased by about 8% with respect to the tyre 1;
- the longitudinal rigidity of the tyre 2 increased by about 6% with respect to the tyre 1 and the longitudinal rigidity of the tyre 3 increased by about 10% with respect to the tyre 1;
- the torsional rigidity of the tyre 2 increased by about 8% with respect to the tyre 1 and the torsional rigidity of the tyre 3 increased by about 12% with respect to the tyre 1.

In order to carry out impact tests against an obstacle, the tyres were inflated to 1.5 bar and each wheel (rim and tyre) had a vertical load of 600 N applied to it. The wheel was made to pass over a fixed obstacle, increasing the speed as 5 km/h increments until the carcass structure broke.

From comparative impact tests against an obstacle it emerged that:
- tyre 1 has breaking speed of the carcass at 20 km/h;
- lo tyre 2 has breaking speed of the carcass at 25 km/h;
- lo tyre 3 has breaking speed of the carcass at 35 km/h.

In order to carry out rideability tests, a dual suspension E-MTB bicycle was alternately equipped with the aforementioned tyres of type 1, 2 and 3. The tyres were inflated to about 1.5 bar. The bicycle was ridden by a tester on a route having an alternation of climbs, descents, flats, fast sections, slow sections, gravel, compact ground, corners with lean, corners with counter-gradient and sudden braking.

The sensations perceived by the tester are summarized in the following table, where the term "rideability" is meant to indicate the ability to maintain the set trajectory, the term "reactivity" is meant to indicate the speed in transferring a drive torque to the ground, the term "sensation of safety" is meant to indicate the progressivity of behavior in cornering. The symbol "+" indicates a slightly improved behavior with respect to a reference given by the bicycle equipped with the tyres of type 1, the symbol "++" indicates a substantially improved behavior with respect to a reference given by the bicycle equipped with the tyres of type 1 and the symbol "+++" indicates a much improved behavior with respect to a reference given by the bicycle equipped with the tyres of type 1.

| | Rideability | Reactivity | Sensation of safety |
|---|---|---|---|
| Tyre 2 | + | ++ | + |
| Tyre 3 | ++ | +++ | ++ |

The present invention has been described with reference to some preferred embodiments. Different modifications can be brought to the embodiments described above, still remaining within the scope of protection of the invention, defined by the following claims.

## Claims

1. Bicycles tyre (100), comprising a pair of bead cores (8), a carcass structure (2) turned around the pair of bead cores (8) and a tread band (4) radially outer to the carcass structure (2); at each bead core (8) being provided:
an elastomeric material filler (12), which extends in a radial direction for a first length (H1) starting from the bead core (8),
a loop (15) interposed between the carcass structure (2) and the elastomeric material filler (12), turned around the bead core (8) so as to define a first flap (15a) axially outer to the elastomeric material filler (12) and a second flap (15b) axially inner to the elastomeric material filler (12), wherein the first flap (15a) extends in a radial direction for a second length (H2) starting from the bead core (8), and the second flap (15b) extends in a radial direction for a third length (H3) starting from the bead core (8);
a bead core to bead core ply (14) placed radially outside the carcass structure (2) and radially inside the tread band (4).

2. Bicycles tyre (100) according to claim 1, wherein the second (H2) and third (H3) lengths are less than or equal to the first length (H1).

3. Bicycles tyre (100) according to claim 1 or 2, wherein the first length (H1) is less than the distance (H4) measured in a radial direction between the bead core (8) and the radially outermost portion of the carcass structure (2).

4. Bicycles tyre (100) according to claim 3, wherein the first length (H1) is between about 20% and about 80% of the distance measured in the radial direction between the bead core (8) and the radially outermost portion of the structure carcass (2).

5. Bicycles tyre (100) according to claim 2, wherein the second (H2) and third (H3) lengths are at least about 30% of the first length (H1).

6. Bicycles tyre (100) according to any one of the preceding claims, wherein the loop (15) is placed in direct contact with the elastomeric material filler (12).

7. Bicycles tyre (100) according to any one of the preceding claims, wherein the elastomeric material filler (12) is a monolithic insert.

8. Bicycles tyre (100) according to any one of the preceding claims, wherein the elastomeric material filler (12) has a thickness, measured in an axial direction, greater than or equal to about 0.5 mm.

9. Bicycles tyre (100) according to any one of the preceding claims, wherein the elastomeric material filler (12) has a thickness, measured in the axial direction, at the portion radially adjacent to the bead core equal to or less than the thickness measured in the axial direction of the bead core (8) measured in the same direction.

10. Bicycles tyre (100) according to any one of the preceding claims, wherein the loop (15) is made with the same material with which the carcass structure (2) is made.

11. Bicycles tyre (100) according to any one of the preceding claims, further comprising, at each bead core (8), an anti-abrasive ribbon-shaped element (13) placed axially outside the carcass structure (2) and turned around the bead core (8).

12. Bicycles tyre (100) according to any one of the preceding claims, wherein said carcass structure (2) comprises at least one carcass ply (3) including a plurality of reinforcing cords inclined of a first angle with respect to an equatorial plane.

13. Bicycles tyre (100) according to claim 12, wherein said first angle is between about 30° and about 60°, extremes included.

14. Bicycles tyre (100) according to claim 12 or 13, wherein said carcass ply (3) is turned around the bead cores (8) so as to produce at least two superimposed layers of carcass ply; the elastomeric material insert (12) and the loop (15) being interposed between the two superimposed layers of carcass ply (3).

15. Bicycles tyre (100) according to claim 14, wherein the carcass ply (3) is turned around the bead cores (8) so as to produce two layers of carcass ply at two first opposite portions (9) of the tyre and three layers of carcass ply (3) superimposed at a second portion (10) of the tyre, placed between the first two portions (9); the elastomeric material insert (12) being placed in said first two portions (9) of the tyre.

## Patentansprüche

1. Fahrradreifen (100), umfassend ein Paar von Wulstkernen (8), eine Karkassenstruktur (2), die um das Paar von Wulstkernen (8) gedreht ist, und ein Laufflächenband (4) radial außerhalb der Karkassenstruktur (2); wobei an jedem Wulstkern (8) Folgendes bereitgestellt ist:
eine Elastomermaterialfüllung (12), die sich ausgehend von dem Wulstkern (8) in einer radialen Richtung über eine erste Länge (H1) erstreckt,
eine Schlaufe (15), die zwischen der Karkassenstruktur (2) und der Elastomermaterialfüllung (12) eingefügt ist, wobei sie um den Wulstkern (8) herum gewickelt ist, um eine erste Klappe (15a) axial außerhalb der Elastomermaterialfüllung (12) und eine zweite Klappe (15b) axial innerhalb der Elastomermaterialfüllung (12) zu definieren, wobei sich die erste Klappe (15a) ausgehend von dem Wulstkern (8) in einer radialen Richtung über eine zweite Länge (H2) erstreckt und sich die zweite Klappe (15b) ausgehend von dem Wulstkern (8) in einer radialen Richtung über eine dritte Länge (H3) erstreckt;
eine Wulstkern-Wulstkern-Lage (14), die radial außerhalb der Karkassenstruktur (2) und radial innerhalb des Laufflächenbands (4) angeordnet ist.

2. Fahrradreifen (100) nach Anspruch 1, wobei die zweite (H2) und die dritte (H3) Länge kleiner oder gleich der ersten Länge (H1) sind.

3. Fahrradreifen (100) nach Anspruch 1 oder 2, wobei die erste Länge (H1) kleiner als der in einer radialen Richtung zwischen dem Wulstkern (8) und dem radial äußersten Abschnitt der Karkassenstruktur (2) gemessene Abstand (H4) ist.

4. Fahrradreifen (100) nach Anspruch 3, wobei die erste Länge (H1) zwischen etwa 20% und etwa 80% des in der radialen Richtung zwischen dem Wulstkern (8) und dem radial äußersten Abschnitt der Karkassenstruktur (2) gemessenen Abstands beträgt.

5. Fahrradreifen (100) nach Anspruch 2, wobei die zweite (H2) und die dritte (H3) Länge mindestens etwa 30% der ersten Länge (H1) betragen.

6. Fahrradreifen (100) nach einem der vorstehenden Ansprüche, wobei die Schlaufe (15) in direktem Kontakt mit der Elastomermaterialfüllung (12) angeordnet ist.

7. Fahrradreifen (100) nach einem der vorstehenden Ansprüche, wobei die Elastomermaterialfüllung (12) eine monolithische Einlage ist.

8. Fahrradreifen (100) nach einem der vorstehenden Ansprüche, wobei die Elastomermaterialfüllung (12) eine in einer axialen Richtung gemessene Dicke größer oder gleich etwa 0,5 mm aufweist.

9. Fahrradreifen (100) nach einem der vorstehenden Ansprüche, wobei die Elastomermaterialfüllung (12) eine in der axialen Richtung gemessene Dicke bei dem radial an den Wulstkern angrenzenden Abschnitt aufweist, die gleich oder kleiner als die in der axialen Richtung gemessene Dicke des Wulstkerns (8), in derselben Richtung gemessen, ist.

10. Fahrradreifen (100) nach einem der vorstehenden Ansprüche, wobei die Schlaufe (15) aus demselben Material hergestellt ist, aus dem die Karkassenstruktur (2) hergestellt ist.

11. Fahrradreifen (100) nach einem der vorstehenden Ansprüche, weiter umfassend, bei jedem Wulstkern (8), ein abriebfestes, bandförmiges Element (13), das axial außerhalb der Karkassenstruktur (2) angeordnet und um den Wulstkern (8) gedreht ist.

12. Fahrradreifen (100) nach einem der vorstehenden Ansprüche, wobei die Karkassenstruktur (2) mindestens eine Karkassenlage (3) umfasst, die eine Vielzahl von Verstärkungscords einschließt, die in einem ersten Winkel in Bezug auf eine Äquatorialebene geneigt sind.

13. Fahrradreifen (100) nach Anspruch 12, wobei der erste Winkel zwischen etwa 30° und etwa 60° liegt, wobei Extrema eingeschlossen sind.

14. Fahrradreifen (100) nach Anspruch 12 oder 13, wobei die Karkassenlage (3) um die Wulstkerne (8) gedreht ist, um mindestens zwei übereinanderliegende Schichten von Karkassenlage zu erzeugen; wobei der Elastomermaterialeinsatz (12) und die Schlaufe (15) zwischen den beiden übereinanderliegenden Schichten der Karkassenlage (3) eingefügt sind.

15. Fahrradreifen (100) nach Anspruch 14, wobei die Karkassenlage (3) um die Wulstkerne (8) gedreht ist, um zwei Lagen von Karkassenlage bei zwei ersten gegenüberliegenden Abschnitten (9) des Reifens und drei Lagen von Karkassenlage (3), die bei einem zweiten Abschnitt (10) des Reifens, der zwischen den ersten beiden Abschnitten (9) angeordnet ist, übereinanderliegen, zu erzeugen; wobei der Elastomermaterialeinsatz (12) in den ersten beiden Abschnitten (9) des Reifens angeordnet ist.

## Revendications

1. Pneu pour bicyclettes (100), comprenant une paire de tringles (8), une structure de carcasse (2) tournée autour de la paire de tringles (8) et une bande de roulement (4) radialement extérieure à la structure de carcasse (2) ; étant fournis au niveau de chaque tringle (8) :
un matériau élastomère de remplissage (12), qui s'étend dans une direction radiale sur une première longueur (H1) à partir de la tringle (8),
une boucle (15) interposée entre la structure de carcasse (2) et le matériau élastomère de remplissage (12), tournée autour de la tringle (8) de manière à définir un premier rabat (15a) axialement extérieur au matériau élastomère de remplissage (12) et un second rabat (15b) axialement intérieur au matériau élastomère de remplissage (12), dans lequel le premier rabat (15a) s'étend dans une direction radiale sur une deuxième longueur (H2) à partir de la tringle (8), et le second rabat (15b) s'étend dans une direction radiale sur une troisième longueur (H3) à partir de la tringle (8) ;
une nappe allant d'une tringle à l'autre (14) placée radialement à l'extérieur de la structure de carcasse (2) et radialement à l'intérieur de la bande de roulement (4).

2. Pneu pour bicyclettes (100) selon la revendication 1, dans lequel les deuxième (H2) et troisième (H3) longueurs sont inférieures ou égales à la première longueur (H1).

3. Pneu pour bicyclettes (100) selon la revendication 1 ou 2, dans lequel la première longueur (H1) est inférieure à la distance (H4) mesurée dans une direction radiale entre la tringle (8) et la partie la plus extérieure radialement de la structure de carcasse (2).

4. Pneu pour bicyclettes (100) selon la revendication 3, dans lequel la première longueur (H1) est comprise entre environ 20 % et environ 80 % de la distance mesurée dans la direction radiale entre la tringle (8) et la partie la plus extérieure radialement de la structure de carcasse (2).

5. Pneu pour bicyclettes (100) selon la revendication 2, dans lequel les deuxième (H2) et troisième (H3) longueurs représentent au moins environ 30 % de la première longueur (H1).

6. Pneu pour bicyclettes (100) selon l'une quelconque des revendications précédentes, dans lequel la boucle (15) est placée en contact direct avec le matériau élastomère de remplissage (12).

7. Pneu pour bicyclettes (100) selon l'une quelconque des revendications précédentes, dans lequel le matériau élastomère de remplissage (12) est un insert monolithique.

8. Pneu pour bicyclettes (100) selon l'une quelconque des revendications précédentes, dans lequel le matériau élastomère de remplissage (12) présente une épaisseur, mesurée dans une direction axiale, supérieure ou égale à environ 0,5 mm.

9. Pneu pour bicyclettes (100) selon l'une quelconque des revendications précédentes, dans lequel le matériau élastomère de remplissage (12) présente une épaisseur, mesurée dans la direction axiale, au niveau de la partie radialement adjacente à la tringle, égale ou inférieure à l'épaisseur mesurée dans la direction axiale de la tringle (8) mesurée dans la même direction.

10. Pneu pour bicyclettes (100) selon l'une quelconque des revendications précédentes, dans lequel la boucle (15) est réalisée dans le même matériau que la structure de carcasse (2).

11. Pneu pour bicyclettes (100) selon l'une quelconque des revendications précédentes, comprenant en outre, au niveau de chaque tringle (8), un élément anti-abrasif en forme de ruban (13) placé axialement à l'extérieur de la structure de carcasse (2) et tourné autour de la tringle (8).

12. Pneu pour bicyclettes (100) selon l'une quelconque des revendications précédentes, dans lequel ladite structure de carcasse (2) comprend au moins une nappe de carcasse (3) incluant une pluralité de câbles de renfort inclinés d'un premier angle par rapport à un plan équatorial.

13. Pneu pour bicyclettes (100) selon la revendication 12, dans lequel ledit premier angle est compris entre environ 30 ° et environ 60 °, extrêmes inclus.

14. Pneu pour bicyclettes (100) selon la revendication 12 ou 13, dans lequel ladite nappe de carcasse (3) est tournée autour des tringles (8) de manière à produire au moins deux couches superposées de nappe de carcasse ; l'insert en matériau élastomère (12) et la boucle (15) étant interposés entre les deux couches superposées de nappe de carcasse (3).

15. Pneu pour bicyclettes (100) selon la revendication 14, dans lequel la nappe de carcasse (3) est tournée autour des tringles (8) de manière à produire deux couches de nappe de carcasse au niveau de deux premières parties opposées (9) du pneu et trois couches de nappe de carcasse (3) superposées au niveau d'une seconde partie (10) du pneu, placée entre les deux premières parties (9) ; l'insert en matériau élastomère (12) étant placé dans lesdites deux premières parties (9) du pneu.
